# EUROPÄISCHE PATENTSCHRIFT

(11) **EP 3 350 058 B1**
(45) Veröffentlichungstag und Bekanntmachung des Hinweises auf die Patenterteilung: **18.12.2019**
(21) Anmeldenummer: 16760692.0
(22) Anmeldetag: 31.08.2016
(51) Int. Cl.: B62D 1/19

(54) **LENKSÄULE FÜR KRAFTFAHRZEUGE MIT ENERGIEABSORBER FÜR DEN CRASHFALL**
STEETING COLUMN FOR A MOTOR VEHICLE WITH AN ENERGY ABSORBER FOR COLLISION EVENTS
COLONNE DE DIRECTION POUTR VÉHICULE AUTOMOBILE AVEC UN ABSORBEUR D'ENERGY POUR DES CAS DE COLLISIONS

(30) Priorität: 16.09.2015 DE 102015217761
(43) Veröffentlichungstag der Anmeldung: 25.07.2018
(73) Patentinhaber: ThyssenKrupp Presta AG, 9492 Eschen (LI); thyssenkrupp AG, 45143 Essen (DE)
(72) Erfinder: SULSER, Hansjörg, 9487 Gamprin (LI); WESELY, Alexander, 6800 Feldkirch (AT); XANDER, Wolfgang, 6800 Feldkirch (AT); BIALEK, Markus, 9470 Buchs (SG) (CH)
(74) Vertreter: thyssenkrupp Intellectual Property GmbH
(86) Internationale Anmeldenummer: PCT/EP2016/070437
(87) Internationale Veröffentlichungsnummer: WO 2017/045916

(56) Entgegenhaltungen:
- DE-B3-102009 059 159
- US-A1- 2014 150 594

## Beschreibung

Die Erfindung betrifft eine Lenksäule für Kraftfahrzeuge, mit einem Mantelrohr, in dem eine Lenkspindel um ihre Längsache drehbar gelagert ist, wobei das Mantelrohr an einem mit dem Fahrzeugchassis fest verbundenen Träger befestigt ist, sodass es im Normalbetrieb des Kraftfahrzeugs mittel Reibungskräften und/ oder elastischen Kräften am Träger unverschieblich gehalten ist, beim Auftreten einer in Folge eines Fahrzeugcrashs auf die Lenkspindel in Richtung zur Fahrzeugfront einwirkenden, einen Grenzwert überschreitenden Kraft in Richtung der Längsachse verschiebbar ist, und mit einer Energieabsorptionsvorrichtung, die ein Biegeelement aufweist, welches einerseits mit dem Träger und andererseits mit dem Mantelrohr verbunden ist und welches im Falle eines Fahrzeugcrashs in Folge der Längsverschiebung des Mantelrohres verformt wird und dabei einen Teil der Bewegungsenergie des Mantelrohrs absorbiert.

Eine derartige Lenksäule mit Energieabsorber für den Crashfall ist aus der DE 10 2009 059 159 B3 bekannt. Diese Lenksäule weist einen Biegedraht auf, welcher durch die eingetragene Aufprallenergie abgewickelt wird. Diese bekannte Lenksäule hat den Nachteil, dass es während dem Abwickeln des Biegedrahts zum Fressen zwischen dem Biegedraht und dem Blechprofil, in dem der Biegedraht angeordnet ist, kommt. Dadurch werden die Crasheigenschaften, wie das Kraftniveau und die Konstanz über die Lebensdauer negativ beeinflusst.

Aufgabe der Erfindung ist es, eine verbesserte Lenksäule der eingangs genannten Art anzugeben, bei der die Neigung des Biegedrahts, mit den benachbarten Bauteilen festzufressen, vermindert ist.

Die erfindungsgemäße Lösung sieht vor, dass das Biegeelement an seinen mit benachbarten Bauelementen in Berührung kommenden Außenflächen mit einem Einlegekörper umgeben ist, der sich im Crashfall zusammen mit dem Biegeelement verformt. Der Einlegekörper verhindert direkte Berührungen zwischen dem Biegeelement und benachbarten Bauelementen, sodass sich das Biegeelement mit Vorteil nicht an benachbarten Bauelementen fest fressen kann.

In einer bevorzugten Ausführungsform ist das Biegeelement als Biegedraht ausgestaltet, der U-förmig gebogen ist und einen im wesentlichen parallel zur Längsachse ausgerichteten kurzen Schenkel mit einem abgeknickten Ende und einem im wesentlichen parallel zur Längsachse ausgerichteten langen Schenkel aufweist, wobei im Crashfall durch Verformen des Biegedraht der kurze Schenkel verlängert und der lange Schenkel verkürzt wird, und dass der Einlegekörper einen kurzen Abschnitt aufweist der einen Teil des kurzen Schenkels abdeckt, einen U-förmig gebogenen Mittelabschnitt und einen langen Abschnitt aufweist, der den zum Verformen bestimmten Abschnitt des langen Schenkels des Biegedrahts von außen umgreift. Damit umgreift bzw. umschließt der Einlegekörper alle Abschnitte des Biegedraht, die im Crashfall verformt werden, um so ein Fressen dieser Abschnitte des Biegedrahts zu verhindern. Unter umgreifen ist ein zumindest teilweises umschließen zu verstehen. Gleichzeitig ist der Einlegekörper so ausgestaltet, dass er die Schenkel und den U-förmigen Mittelabschnitt des Biegedrahts umschließt bzw. umgreift, sodass der Einlegekörper seitlich nicht verrutschen oder sogar herausfallen kann. Unter "im Wesentlichen parallel zur Längsachse" wird ein Raumwinkel zur Längsachse mit einem Wert kleiner oder gleich ±10° verstanden.

In einer bevorzugten Ausgestaltungsform ist der Einlegekörper an seinem gebogenen Mittelabschnitt mit seitlich paarweise gegenüberliegenden Laschen versehen, die mit dem Einlegekörper einstückig ausgeformt und nach innen umgebogen sind, um das Biegeelement seitlich zu umschließen bzw. zu umgreifen. Die Laschen sichern so die korrekte Lage des Einlegekörpers auf dem Biegeelement. Darüber hinaus sind sie auf einfache Weise durch Stanzen und Biegen aus einem einzigen Materialstück herstellbar.

In einer Weiterbildung der Erfindung ist der Einlegekörper an seinem oberen Endbereich des langen Abschnitts mit zwei gegenüberliegenden Laschen versehen, die mit dem Einlegekörper einstückig ausgeformt und nach innen um gebogen sind, um das Biegeelement seitlich zu umschließen bzw. zu umgreifen. Diese Laschen im Endbereich des langen Abschnitts können in Längsrichtung weiter ausgedehnt sein als die Laschen im Biegebereich auch sie dienen der Sicherung der korrekten Lage des Einlegekörpers auf dem Biegeelement. Sie können ebenso wie die kleineren Laschen durch Ausstanzen und Umbiegen hergestellt werden, sodass der Einlegekörper aus einem einzigen Materialstück ausgeformt sein kann.

Genauso wie im oberen Endbereich können Laschen auch im unteren Endbereich des kurzen Abschnitts des Einlegekörper vorgesehen sein, wenn die Einbauverhältnisse dies zulassen. Falls die Einbauverhältnisse dem entgegenstehen, kann der Endbereich des kurzen Abschnitts des Einlegekörpers selbstverständlich auch ohne Laschen ausgestaltet sein.

In einer abgewandelten Ausführungsform des Einlegekörpers ist dessen langer Abschnitt mit weiteren Laschen versehen, die den zur Verformung vorgesehenen Bereich des langen Schenkels des Biegedrahts seitlich umfassen. Dieser Bereich ist vor einem Fahrzeugcrash zwar gerade ausgestaltet, wird aber im Laufe der Verbiegung des Biegekörpers während des Fahrzeugcrashs verformt und gelangt dabei in den U-förmig gebogenen Bereich des Biegeelements, wobei der Einlegekörper sich entsprechend U-förmig verformt. In diesem Zustand leisten die genannten weiteren Laschen gute Dienste zur Fixierung der korrekten Position des Einlegekörpers.

In einer bevorzugten Ausführungsform ist der Einlegekörper aus Metallblech oder aus Federstahlblech ausgestaltet. Dieses Material ist kostengünstig zu beschaffen und mit einfachen Mitteln auf einfache Weise zu bearbeiten.

Vorzugsweise wird der Einlegekörper durch ein Stanz-Biege-Verfahren ausgeformt und ist daher einstückig ausgestaltet. Dieses Verfahren eignet sich besonders für Metallbleche oder Federstahlblech, kann unter Umständen aber auch mit anderen Materialien verwendet werden.

Vorzugsweise weist der Einlegekörper aus Metallblech oder Federstahlblech eine grössere Härte als der Biegeelement auf. Dies führt zu einer weiteren Reduzierung der Fressneigung.

In einer Ausgestaltungsvariante der Erfindung ist vorgesehen, dass der Einlegekörper aus Kunststoff oder einem Hartgewebe besteht. Diese Materialien sind unter Umständen noch kostengünstiger als Metallblech und können die Anforderungen der vorliegenden Erfindung erfüllen.

In einer Weiterbildung der Erfindung kann der Einlegekörper zumindest teilweisen mit einer Beschichtung versehen sein, die das Fressen des Biegeelements mit anliegenden Bauteilen noch weiter reduzieren kann. Beispielsweise kann als Beschichtung ein Gleitlack oder eine Festschmierstoffschicht, wie beispielsweise Molybdändisulfid oder Graphit, dienen. Auch eine Beschichtung mit Polytetrafluorethylen ist denkbar und möglich.

Ausführungsbeispiele der Erfindung werden nachfolgend anhand der Zeichnungen näher erläutert. Die Figuren zeigen im Einzelnen:
Figur 1: eine perspektivische Ansicht einer verstellbaren Lenksäule für Kraftfahrzeuge mit erfindungsgemäßer Energieabsorptionsvorrichtung;
Figur 2: ein Mantelrohr der erfindungsgemäßen Lenksäule mit Energieabsorptionsvorrichtung in perspektivischer Darstellung;
Figur 3: eine Seitenansicht eines Mantelrohrs einer erfindungsgemäßen Lenksäule mit Energieabsorptionsvorrichtung;
Figur 4: eine seitliche Schnittdarstellung eines Mantelrohrs mit erfindungsgemäßer Energieabsorptionsvorrichtung vor dem Einbau in die Lenksäule mit einen Biegekörper in seiner ursprünglichen Form;
Figur 5: eine Teilansicht aus Figur 4 mit einem Biegekörper, der nach einem Fahrzeugcrash verformt ist;
Figur 6: eine Darstellung eines Mantelrohrs mit erfindungsgemäßer Energieabsorptionsvorrichtung nach Art einer Sprengzeichnung;
Figur 7: ein erfindungsgemäßer Einlegekörper in einer ersten Ausführungsform;
Figur 8: ein erfindungsgemäßer Einlegekörper in einer zweiten Ausführungsform.

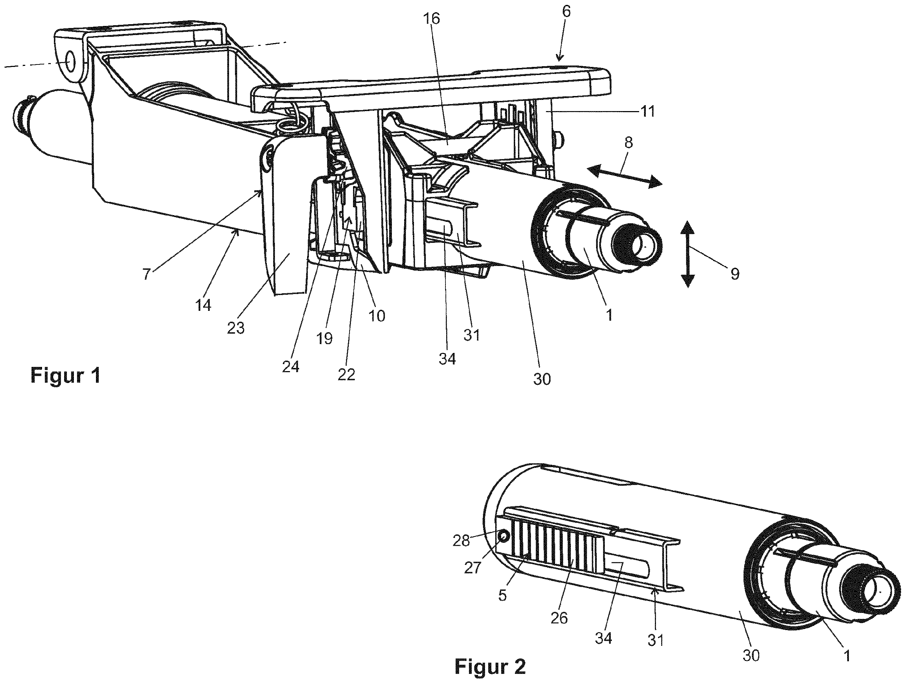

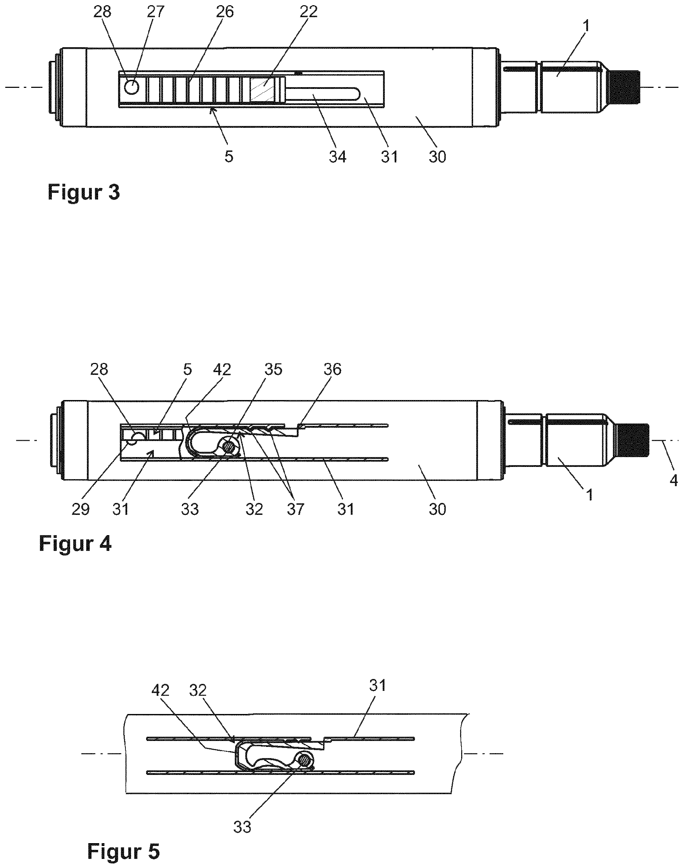

In Figur 1 ist eine erfindungsgemäße Lenksäule für Kraftfahrzeuge dargestellt, die ein Mantelrohr 30 aufweist, in dem eine Lenkspindel 1 um ihre Längsachse 4 (siehe Figur 4) drehbar gelagert ist. Das Mantelrohr 30 ist an einem mit dem nicht gezeigten Fahrzeugchassis fest verbundenen Träger 6 befestigt, wobei es mittels einer Verstellvorrichtung in Pfeilrichtung 9 nach oben oder unten verstellbar angeordnet ist außerdem ist eine Längsverstellung in Pfeilrichtung 8 vorgesehen, die jedoch im Zusammenhang mit der vorliegenden Erfindung unwesentlich ist. Zum Verstellen in Pfeilrichtung 8 oder in Pfeilrichtung 9 wird eine Feststelleinrichtung 7 mittels eines Spannhebels 23 gelöst, die Lenksäule nach Belieben im Rahmen eines definierten Verstellbereichs verstellt und anschließend die Verstellmöglichkeiten mit der Feststelleinrichtung 7 wieder festgestellt und verriegelt, sodass keine Verstellbewegung in Pfeilrichtung 8 oder Pfeilrichtung 9 mehr möglich ist.

Der Träger 6 ist mit zwei nach unten ragenden Klemmbacken 10, 11 versehen, zwischen denen das Mantelrohr 30 angeordnet ist und bei geschlossener Feststellvorrichtung 7 festgeklemmt werden kann. Die Feststellvorrichtung 7 ist für diesen Zweck mit einem Spannbolzen 16 ausgestattet, der die beiden Klemmbacken 10, 11 miteinander verbindet. Auf der Seite des Klemmbackens 10 ist eine Nockenscheibe 24 angeordnet, die mit dem Spannhebel 23 verbunden ist, sodass bei einer Betätigung des Spannhebels 23 die Nockenscheibe 24 gedreht und ein mit der Nockenscheibe 24 zusammen wirkendes Feststellteil 19 quer zur Längsrichtung 4 in Richtung Mantelrohr 30 gedrückt wird. Das Feststellteil 19 durchsetzt eine Öffnung des Klemmbackens 10 und drückt gegen einen Abschnitt 22, der mit einer nicht gezeigten Verzahnung in die Verzahnung 26 eines Rückhalteteils 5 eingreift, welches man in den Figuren 2, 3 und 6 gut erkennen kann. Über den Klemmeingriff der Feststellvorrichtung 7 ist das Rückhalteteil 5 mittels seiner Verzahnung 26 unverrückbar mit dem Träger 6 verbunden, solange die Feststellvorrichtung nicht gelöst wird.

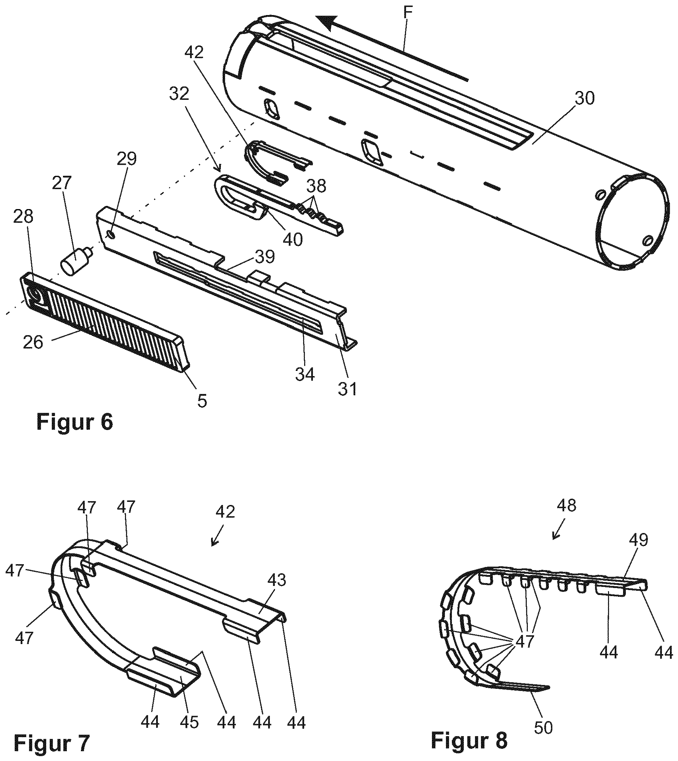

Wie man am besten in den Figuren 2 und 6 erkennt, ist das Mantelrohr 30 fest mit einer Schiene 31 verbunden, welche U-förmig umgebogene Seitenwände aufweist, die am Mantelrohr 30 festgeschweißt sind. Dadurch entsteht ein streifenförmiger Hohlraum zwischen der Schiene 31 und dem Mantelrohr 30 in welchem ein Biegedraht 32 angeordnet ist. Die Schiene ist in ihrem Mittelabschnitt mit einem längs über den größten Teil der Schiene 31 verlaufenden Schlitz 34 versehen, durch den hindurch ein Stift 33 (siehe Figuren 4 und 5) des Rückhalteteils 5 in eine Öse 35 des Biegedrahts 32 eingreift. Die Öse 35 ist an einem kurzen Schenkel des Biegedrahts 32 angeordnet, welcher über einen U-förmig gebogenen Bereich, d.h. über einen zurückgebogenen Bereich, in einen langen Schenkel übergeht. Beide Schenkel sind parallel zur Längsrichtung 4 ausgerichtet. Der lange Schenkel ist über einen Anschlag 36 und Fortsätze 37 des oberen Seitenteils der Schiene 31 eingerastet und so mit der Schiene 31 formschlüssig verbunden. Dabei greifen Vorsprünge 38 des Biegeelements 32 in die Aussparung 39 des Seitenteils der Schiene 31 ein. Das Ende 40 des Biegeteils 32 kann auch wie in Figur 6 gezeigt umgebogene sein statt eine geschlossene Öse 35 zu bilden. Wird das Rückhalteteil 5 mittels der Feststellvorrichtung 7 gegen die am Mantelrohr 30 verschweißte Schiene 31 gedrückt, so verhindert bereits der Reibschluss zwischen dem Rückhalteteil 5 und der Schiene 31 eine unbeabsichtigte Verschiebung des Mantelrohrs 30 im Normalbetrieb des Kraftfahrzeugs. Des weiteren wird eine Verschiebung in Längsrichtung 4 durch Eingriff des Stiftes 33 des Rückhalteteils 5 in die Öse 35 oder das umgebogene Ende 40 des Biegeelements 32 verhindert, da das Biegeelement 32 über die Vorsprünge 38 in die Aussparung 39 des Seitenteils der am Mantelrohr 30 festgeschweißten Schiene 31 formschlüssig eingreift und daher in Längsrichtung 4 nicht verschiebbar ist.

Darüber hinaus kann zusätzlich ein Sicherungsbolzen 27 vorgesehen sein, welcher einerseits durch eine Öffnung 28 im Rückhalteteil 5 hindurch geht und andererseits in eine Öffnung 39 der Schiene 31 eingesteckt ist. Der Sicherungsbolzen 27 bildet zusammen mit den Öffnungen 28, 29 eine Losbrechverbindung, welche sicherstellt, dass eine definierte Losbrechkraft in Längsrichtung 4 auf die Lenkspindel 1 der Lenksäule einwirken muss, bevor das schmale Ende des Sicherungsbolzens 27, welches in die kleine Öffnung 29 der Schiene 31 eingreift aus der Öffnung 29 herausbricht und so die weitere Bewegung der Schiene 31 zusammen mit dem Mantelrohr 30 in Richtung der zur Fahrzeugfront hin einwirkenden Kraft F ermöglicht. Bei der nachfolgenden Bewegung in Richtung der Kraft F in Längsrichtung 4 der Lenkspindel 1 bewegt sich das Mantelrohr 30 zusammen mit der Schiene 31, wobei der am Rückhalteteil 5 befestigte Stift fest stehen bleibt, denn das Rückhalteteil 5 ist ja über die Verzahnung 26 mit dem Klemmbacken 10 des am Fahrzeugchassis befestigten Trägers 6 gegenüber dem Fahrzeugchassis unbeweglich. Damit wird das Ende 40 bzw. die Öse 35 des Biegeelements 23 ortsfest gehalten, während der obere längere Schenkel durch die Schiene 31 zusammen mit dem Mantelrohr in Richtung der einwirkenden Kraft F geschoben wird. Dabei wird ein Teil des langen Schenkels des Biegeelements 32 umgebogene und gelangt in den U-förmigen Bereich, der beide Schenkel verbindet. Diese Situation kann man in Figur 5 erkennen.

Durch die aufzubringende Biegearbeit wird ein Teil der Bewegungsenergie der Schiene 31 und des Mantelrohrs 33 sowie der mit dem Mantelrohr verbundenen Teile wie Lenkspindel und möglicherweise den auf die Lenkspindel drückenden Fahrer des Fahrzeugs im Biegeelement 32 absorbiert und in Wärme umgewandelt und in Verformungsarbeit umgesetzt. Dabei ergibt sich eine bremsende Wirkung auf die Bewegung in Längsrichtung 4 zur Fahrzeugfront hin.

Zwischen den Außenflächen des Biegeelements 32 und den Innenflächen der Schiene 31 kann es zum Festklemmen oder Festfressen kommen, sodass die für die Verformung des Biegeelements 32 erforderliche Kraft um die zum Losbrechen des festgefressenen Biegeelements 32 von der Schiene 31 erforderliche Kraft modifiziert wird. Dadurch ist die Energieabsorption pro Wegeinheit und damit die Bremswirkung der Energieabsorptionsvorrichtung nicht mehr im gewünschten Bereich.

Um das Festfressen des Biegeelements 32 zu verhindern, ist ein Einlegekörper 42 vorgesehenen, der die größeren Flächen des Biegeelements umschließt bzw. umgreift und somit die Berührung der Außenflächen des Biegeelements mit seinen benachbarten Bauelementen, hier insbesondere die Schiene 31 und das Mantelrohr 30, verhindert. Das Biegeelement 32 besteht aus einem Biegedraht, welcher vom Einlegekörper 42, 48 umschlossen ist. Der Einlegekörper besteht aus einem Formblechteil, vorzugsweise aus Federstahl, welcher die U-förmig gebogene Form des Biegeelements übernimmt und einen etwas längeren oberen Abschnitt und einen etwas kürzeren unteren Abschnitt aufweist, die über den U-förmig gebogene Mittelabschnitt 46 miteinander verbunden sind. Der kurze Abschnitt des Einlegekörpers überdeckt einen Teil des kurzen Schenkels des Biegeelements 32. Der gebogene Mittelabschnitt 46 des Einlegekörpers überdeckt den U-förmigen Bereich des Biegeelements 32. Der lange Abschnitt des Einlegekörpers 42, 48 überdeckt den langen Schenkel des Biegeelements 32. Der Mittelabschnitt 46 des Einlegekörpers 42, 48 ist mit seitlich paarweise gegenüberliegenden Laschen 47 versehen, die mit dem Einlegekörper 42, 48 einstückig ausgeformt und nach innen umgebogen sind, um das Biegeelement 32 seitlich zu umschließen. Des Weiteren sind im oberen Endbereich 43, 49 des Einlegekörpers 42, 48 zwei gegenüberliegende längere Laschen 44 vorgesehen, die mit dem Einlegekörpers und 40, 48 ebenfalls einstückig ausgeformt und nach innen umgebogen sind, um das Biegeelement 32 seitlich zu umschließen.

In einer abgewandelten Ausführungsform ist auch der untere Endbereich 45 des kurzen Abschnitts des Einlegekörpers 42 mit längeren Laschen 44 wie beim oberen Endbereich 43 versehen.

Eine andere Ausführungsform sieht vor, dass der lange Abschnitt des Einlegekörpers 48 mit weiteren Laschen versehen ist, die den zur Verformung vorgesehenen Bereich des langen Schenkels des Biegeelements 32 seitlich umfassen.

Der vorliegende Einlegekörper 33, 48 ist aus Federstahlblech gestanzt und gebogen, sodass er mit allen seinen Teilen, insbesondere den Laschen 44, 47 einstückig ausgestaltet ist. Dies geschieht durch ein bekanntes Stanz-Biege-Verfahren.

Der untere Endbereich 50 der alternativen Ausführungsform des Einlegekörpers 48 kann auch ohne Laschen ausgestaltet sein.

Des weiteren kann der Einlegekörpers 42, 48 zumindest teilweise mit einer Beschichtung versehen werden, um ein Festfressen des Einlegekörpers am Biegeelement 32 oder an den umgebenden Bauteilen, insbesondere der Schiene 31 und dem Mantelrohr 30 zu verhindern.

**BEZUGSZEICHENLISTE**

| | | | |
|---|---|---|---|
| 1 | Lenkspindel | 30 | Mittelrohr |
| 4 | Längsachse | 31 | Schiene |
| 5 | Rückhalteteil | 32 | Biegeelement/ Biegedraht |
| 6 | Träger | 33 | Stift |
| 7 | Feststellvorrichtung | 34 | Schlitz |
| 8 | Pfeilrichtung | 35 | Öse |
| 9 | Pfeilrichtung | 36 | Anschlag |
| 10 | Klemmbacken | 37 | Fortsatz |
| 11 | Klemmbacken | 38 | Vorsprung |
| 16 | Spannbolzen | 39 | Aussparung |
| 19 | Feststellteil | 40 | Ende |
| 22 | Abschnitt | 42 | Einlegekörper |
| 23 | Spannhebel | 43 | oberer Endbereich |
| 24 | Nockenscheibe | 44 | Laschen |
| 26 | Verzahnung | 45 | unterer Endbereich |
| 27 | Scherbolzen | 46 | gebogener Mittelabschnitt |
| 28 | Öffnung | 47 | Laschen |
| 29 | Öffnung | 48 | modifizierter Einlegekörper |
| 49 | oberer Endbereich | | F Kraft |
| 50 | unterer Endbereich | | |

## Patentansprüche

1. Lenksäule für Kraftfahrzeuge, mit einem Mantelrohr (30), in dem eine Lenkspindel (1) um ihre Längsachse (4) drehbar gelagert ist, wobei das Mantelrohr (30) an einem mit dem Fahrzeugchassis fest verbundenen Träger (6) befestigt ist, sodass es im Normalbetrieb des Kraftfahrzeugs mittels Reibungskräften und/ oder elastischen Kräften am Träger (6) unverschieblich gehalten ist, beim Auftreten einer infolge eines Fahrzeugcrashs auf die Lenkspindel (1) in Richtung zur Fahrzeugfront einwirkenden, einen grenzwertüberschreitenden Kraft (F) in Richtung der Längsachse (4) verschiebbar ist, und mit einer Energieabsorptionsvorrichtung (5), (31), (32), die ein Biegeelement (32) aufweist, welches einerseits mit dem Träger (6) und andererseits mit dem Mantelrohr (30) verbunden ist und welches im Falle eines Fahrzeugcrashs infolge der Längsverschiebung des Mantelrohr (30) verformt wird und dabei einen Teil der Bewegungsenergie des Mantelrohrs (30) absorbiert, **dadurch gekennzeichnet, dass** das Biegeelement (32) an seinem mit benachbarten Bauelementen (30), (31) in Berührung kommenden Außenflächen mit einem Einlegekörper (42), (48) umgeben ist, der sich im Crashfall zusammen mit dem Biegeelement (32) verformt.

2. Lenksäule nach Anspruch 1, **dadurch gekennzeichnet, dass** das Biegeelement (32) als Biegedraht (32) ausgestaltet ist, der U-förmig gebogen ist und einen im wesentlichen parallel zur Längsachse (4) ausgerichteten kurzen Schenkel mit einem abgeknickten Ende (40) oder einem mit einer Öse (35) versehenen Ende und einen im wesentlichen parallel zur Längsachse (4) ausgerichteten langen Schenkel aufweist, wobei im Crashfall durch verformen des Biegedrahts (32) der kurze Schenkel verlängert und der lange Schenkel verkürzt wird, und dass der Einlegekörper (42), (48) einen kurzen Abschnitt aufweist, der einen Teil des kurzen Schenkels abdeckt, einen U-förmig gebogenen Mittelabschnitt (46) und einen langen Abschnitt aufweist, der den zum Verformen bestimmten Abschnitt des langen Schenkels des Biegedraht (32) von außen umgreift.

3. Lenksäulen nach Anspruch 1 oder 2, **dadurch gekennzeichnet, dass** der Einlegekörper (32), (48) an seinem gebogenen Mittelabschnitt (40) mit seitlich paarweise gegenüberliegenden Laschen (47) versehen ist, die mit dem Einlegekörper (42), (48) einstückig ausgeformt und nach innen umgebogen sind, um das Biegeelement (32) seitlich zu umgreifen.

4. Lenksäule nach Anspruch 3, **dadurch gekennzeichnet, dass** der Einlegekörper (42), (48) in seinem oberen Endbereich (43), (49) des langen Abschnitts mit zwei gegenüberliegenden Laschen (44) versehen ist, die mit dem Einlegekörper (42), (48) einstückig ausgeformt und nach innen umgebogen sind, um das Biegeelement (32) seitlich zu umgreifen.

5. Lenksäule nach einem der Ansprüche 3-5, **dadurch gekennzeichnet, dass** ein unterer Endbereich (45) des kurzen Abschnitts des Einlegekörpers (42) mit zwei gegenüberliegenden versehen ist, die mit dem Einlegekörper (42), (48) einstückig ausgeformt und nach innen umgebogen sind, um das Biegeelement (32) seitlich zu umgreifen.

6. Lenksäule nach Anspruch 3 oder 4, **dadurch gekennzeichnet, dass** der lange Abschnitt des Einlegekörpers (48) mit weiteren Laschen versehen ist, die den zur Verformung vorgesehenen Bereich des langen Schenkels des Biegedrahts (32) seitlich umfassen.

7. Lenksäule nach einem der vorhergehenden Ansprüche, **dadurch gekennzeichnet, dass** der Einlegekörper (42), (48) als Metallblech, oder als Federstahlblech ausgestaltet ist.

8. Lenksäule nach Anspruch 7, **dadurch gekennzeichnet, dass** der Einlegekörper (42), (48) einstückig durch ein Stanz-Biege-Verfahren geformt ist.

9. Lenksäule nach einem der Ansprüche 1-6, **dadurch gekennzeichnet, dass** der Einlegekörper (42), (48) aus Kunststoff oder einem Hartgewebe besteht.

10. Lenksäule nach einem der vorhergehenden Ansprüche, **dadurch gekennzeichnet, dass** der Einlegekörper (42), (48) zumindest teilweisen mit einer Beschichtung versehen ist.

## Claims

1. Steering column for motor vehicles, having a steering column tube (30), in which a steering spindle (1) is mounted rotatably about its longitudinal axis (4), wherein the steering column tube (30) is fastened to a carrier (6) which is fixedly connected to the vehicle chassis so that, in normal operation of the motor vehicle, it is retained non-displaceably on the carrier (6) by means of friction forces and/or elastic forces, is displaceable in the direction of the longitudinal axis (4) in the event of the occurrence of a force (F) which acts on the steering spindle (1) in the direction of the front of the vehicle as a result of a vehicle crash and exceeds a threshold value, and having an energy-absorption device (5), (31), (32), which comprises a bending element (32) which is connected on the one hand to the carrier (6) and on the other hand to the steering column tube (30) and which is deformed in the event of a vehicle crash as a result of the longitudinal displacement of the steering column tube (30) and thereby absorbs part of the kinetic energy of the steering column tube (30), **characterized in that** the bending element (32) is surrounded on its outer surfaces which come into contact with adjacent structural elements (30), (31) with an insertion body (42), (48) which deforms together with the bending element (32) in the event of a crash.

2. Steering column according to Claim 1, **characterized in that** the bending element (32) is configured as bending wire (32) which is bent in a U-shape and comprises a short limb, which is oriented substantially parallel to the longitudinal axis (4), with a bent end (40) or an end provided with an eye (35) and a long limb, which is oriented substantially parallel to the longitudinal axis (4), wherein, in the event of a crash, the short limb is lengthened and the long limb is shortened by deforming the bending wire (32), and **in that** the insertion body (42), (48) comprises a short portion, which covers a part of the short limb, comprises a central portion (46) bent in a U-shape and a long portion which engages from the outside around that portion of the long limb of the bending wire (32) which is intended for deformation.

3. Steering column according to Claim 1 or 2, **characterized in that** the insertion body (32), (48) is provided on its bent central portion (40) with lugs (47) laterally opposite one another in pairs which are formed in one piece with the insertion body (42), (48) and are bent inwards in order to laterally engage around the bending element (32).

4. Steering column according to Claim 3, **characterized in that** the insertion body (42), (48) is provided in its upper end region (43), (49) of the long portion with two opposite lugs (44) which are formed in one piece with the insertion body (42), (48) and are bent inwards in order to laterally engage around the bending element (32).

5. Steering column according to any one of Claims 3-5, **characterized in that** a lower end region (45) of the short portion of the insertion body (42) is provided with two opposite which are formed in one piece with the insertion body (42), (48) and are bent inwards in order to laterally engage around the bending element (32) .

6. Steering column according to Claim 3 or 4, **characterized in that** the long portion of the insertion body (48) is provided with further lugs which laterally enclose that region of the long limb of the bending wire (32) which is provided for deformation.

7. Steering column according to any one of the preceding claims, **characterized in that** the insertion body (42), (48) is configured as sheet metal, or as spring steel sheet.

8. Steering column according to Claim 7, **characterized in that** the insertion body (42), (48) is formed in one piece by a punching/bending process.

9. Steering column according to any one of Claims 1-6, **characterized in that** the insertion body (42), (48) is composed of plastic or a laminated fabric.

10. Steering column according to any one of the preceding claims, **characterized in that** the insertion body (42), (48) is provided at least partially with a coating.

## Revendications

1. Colonne de direction destinée à des véhicules automobile, laquelle comprend un tube de colonne de direction (30) dans lequel un arbre de direction (1) est monté de manière à pouvoir tourner sur son axe longitudinal (4), le tube de colonne de direction (30) étant fixé à un support (6) relié de manière fixe au châssis du véhicule, de sorte qu'il soit maintenu immobile au support (6) par des forces de friction et/ou des forces élastiques pendant le fonctionnement normal du véhicule automobile, et pouvant coulisser dans la direction de l'axe longitudinal (4) lorsqu'une force (F), dépassant un seuil, survient et agit sur l'arbre de direction (1) en direction de l'avant du véhicule en raison d'une collision du véhicule, ainsi qu'un dispositif d'absorption d'énergie (5), (31), (32) qui comporte un élément flexible (32) qui est relié d'une part au support (6) et d'autre part au tube de colonne de direction (30) et qui est déformé en raison du coulissement longitudinal du tube de colonne de direction (30) en cas de collision du véhicule et absorbe ainsi une partie de l'énergie cinétique du tube de colonne de direction (30), **caractérisé en ce que** l'élément flexible (32) est entouré, sur ses surfaces extérieures venant en contact avec des composants adjacents (30), (31), par un corps d'insertion (42), (48) qui se déforme conjointement avec l'élément flexible (32) en cas de collision.

2. Colonne de direction selon la revendication 1, **caractérisée en ce que** l'élément flexible (32) est réalisé sous la forme d'un fil flexible (32) qui est incurvé en forme de U et qui comporte une branche courte sensiblement parallèle à l'axe longitudinal (4) et pourvue d'une extrémité coudée (40) ou d'une extrémité munie d'un œillet (35) et une branche longue jambe sensiblement parallèle à l'axe longitudinal (4), la branche courte étant allongée, et la branche longue étant raccourcie, en cas de collision par déformation du fil flexible (32), et **en ce que** le corps d'insertion (42), (48) comporte une partie courte qui recouvre une partie de la branche courte, une partie médiane (46) incurvée en forme de U et une partie longue qui s'engage depuis l'extérieur autour de la partie, destinée à se déformer, de la branche longue du fil flexible (32).

3. Colonne de direction selon la revendication 1 ou 2, **caractérisée en ce que** le corps d'insertion (32), (48) est pourvu, au niveau de sa partie médiane incurvée (40), de pattes (47) qui sont opposées latéralement deux à deux, qui sont formées d'une seule pièce avec le corps d'insertion (42), (48) et qui sont incurvées vers l'intérieur pour s'engager latéralement autour de l'élément flexible (32).

4. Colonne de direction selon la revendication 3, **caractérisée en ce que** le corps d'insertion (42), (48) est pourvu, dans sa région d'extrémité supérieure (43), (49) de la partie longue, de deux pattes opposées (44) qui sont formées d'une seule pièce avec le corps d'insertion (42), (48) et qui sont incurvées vers l'intérieur pour s'engager latéralement autour de l'élément flexible (32).

5. Colonne de direction selon l'une des revendications 3 à 5, **caractérisée en ce qu'**une région d'extrémité inférieure (45) de la partie courte du corps d'insertion (42) est pourvue de deux opposées qui sont formées d'une seule pièce avec le corps d'insertion (42), (48) et qui sont incurvées vers l'intérieur pour s'engager latéralement avec l'élément flexible (32).

6. Colonne de direction selon la revendication 3 ou 4, **caractérisée en ce que** la partie longue du corps d'insertion (48) est pourvue d'autres pattes qui comprennent latéralement la région, destinée à se déformer, de la branche longue du fil flexible (32).

7. Colonne de direction selon l'une des revendications précédentes, **caractérisée en ce que** le corps d'insertion (42), (48) est réalisé sous la forme d'une tôle métallique ou d'une tôle en acier à ressort.

8. Colonne de direction selon la revendication 7, **caractérisée en ce que** le corps d'insertion (42), (48) est formé d'une seule pièce par un procédé d'estampage et de flexion.

9. Colonne de direction selon l'une des revendications 1 à 6, **caractérisée en ce que** le corps d'insertion (42), (48) est en matière synthétique ou en un tissu dur.

10. Colonne de direction selon l'une des revendications précédentes, **caractérisée en ce que** le corps d'insertion (42), (48) est au moins partiellement pourvu d'un revêtement.
